# FASCICULE DE BREVET EUROPEEN

(11) **EP 1 586 157 B1**
(45) Date de publication et mention de la délivrance du brevet: **11.11.2009**
(21) Numéro de dépôt: 03815957.0
(22) Date de dépôt: 31.12.2003
(51) Int. Cl.: H02M 7/538

(54) **GENERATEUR D'ALIMENTATION D'UN CIRCUIT OSCILLANT, NOTAMMENT POUR LA TABLE DE CUISSON PAR INDUCTION**
VERSORGUNGSGENERATOR FÜR EINE OSZILLATIONSSCHALTUNG INSBESONDERE FÜR EINEN INDUKTIONSHERD
SUPPLY GENERATOR FOR AN OSCILLATING CIRCUIT, PARTICULARLY FOR AN INDUCTION COOKING HOB

(30) Priorité: 21.01.2003 FR 0300613
(43) Date de publication de la demande: 19.10.2005
(73) Titulaire: FAGORBRANDT SAS, 92500 Rueil Malmaison (FR)
(72) Inventeur: CORNEC, René, 85300 Challan (FR); GOUARDO, Didier, F-45770 Saran (FR); GOUMY, Cédric, F-45140 St Jean De La Ruelle (FR)
(74) Mandataire: Stankoff, Hélène
(86) Numéro de dépôt international: PCT/FR2003/003949
(87) Numéro de publication internationale: WO 2004/075387

(56) Documents cités:
- GB-A- 2 348 750
- HUSSEY S: "20 kHz main inverter unit" IEEE, 6 août 1989 (1989-08-06), pages 591-595, XP010089775
- IZAKI K ET AL: "NEW CONSTANT-FREQUENCY VARIABLE POWERED QUASIRESONANT INVERTER TOPOLOGY USING SOFT-SWITCHED TYPE IGBTS FOR INDUCTION-HEATED COOKING APPLIANCE WITH ACTIVE POWER FILTER" EPE '95: 6TH. EUROPEAN CONFERENCE ON POWER ELECTRONICS AND APPLICATIONS. SEVILLA, SEPT. 19 - 21, 1995, EUROPEAN CONFERENCE ON POWER ELECTRONICS AND APPLICATIONS, BRUSSELS, EPE ASSOCIATION, B, vol. 2 CONF. 6, 19 septembre 1995 (1995-09-19), pages 2129-2134, XP000537734
- DIECKERHOFF S ET AL: "Design of an IGBT-based LCL-resonant inverter for high-frequency induction heating" INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, 3 octobre 1999 (1999-10-03), pages 2039-2045, XP010355091 ISBN: 0-7803-5589-X
- OGIWARA H ET AL: "High frequency induction heating load resonant inverter with voltage-clamped quasi-resonant switched using newly-improved static induction transistors/thyristors and their phase shifted controlled scheme" PROCEEDINGS OF THE INDUSTRY APPLICATIONS SOCIETY ANNUAL MEETING. HOUSTON, OCT. 4 - 9, 1992, NEW YORK, IEEE, US, vol. 1, 4 octobre 1992 (1992-10-04), pages 941-948, XP010063657 ISBN: 0-7803-0635-X

## Description

La présente invention concerne un générateur d'alimentation d'un circuit oscillant.

Elle concerne également un ensemble de tels générateurs, ainsi qu'une table de cuisson par induction comprenant plusieurs générateurs conformes à l'invention.

La présente invention vise de manière générale les systèmes de chauffage par induction, et notamment les tables de cuisson comportant plusieurs foyers à induction alimentés respectivement par des générateurs.

Ces tables à induction nécessitent la génération d'un courant haute fréquence, de l'ordre de 20 à 50 kHz, dans le récipient ou matériau à chauffer.

Classiquement, ce courant est créé par un champ magnétique issu d'un inducteur couplé à un générateur de puissance.

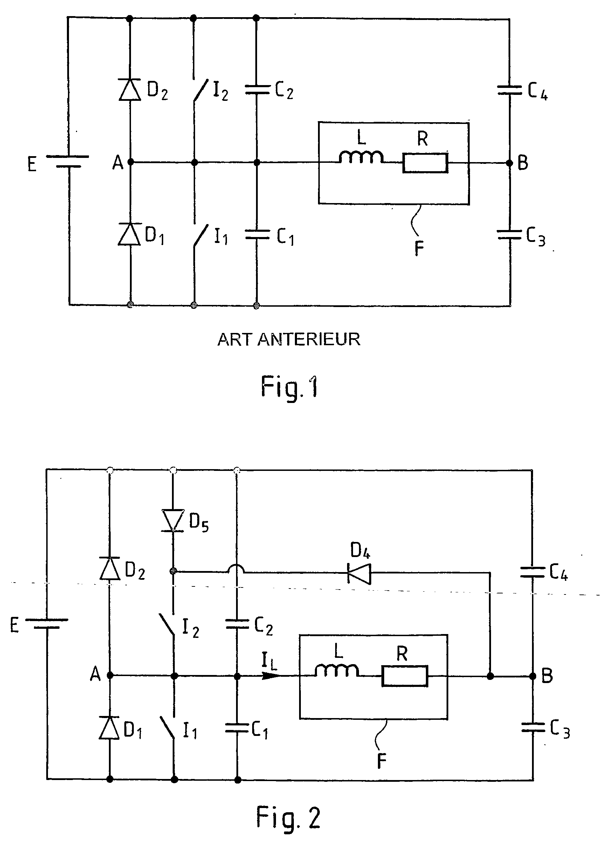

Généralement, ce générateur de puissance est un générateur à résonance tel qu'illustré à la figure 1.

Ce générateur de puissance est alimenté à partir du réseau électrique, par une tension d'alimentation redressée et filtrée E.

Ainsi, à chaque foyer F, comprenant une inductance et une charge résistive R notamment constituée par le récipient à chauffer, sont associés des condensateurs de résonance C₃, C₄ pour former un circuit résonant à la pulsation ω telle que L(C₃+C₄) ω² = 1.

Le fonctionnement à résonance est d'autant plus important que le couple fréquence de découpage/puissance du générateur est important.

Tel est le cas notamment dans l'induction où la fréquence de découpage est d'au moins 20 kHz et les puissances mises en jeu par le générateur sont de l'ordre de 3 kW.

L'utilisation de ces générateurs à résonance permet de transmettre une puissance maximale à une charge inductive lorsque l'on se positionne à la fréquence de résonance du système d'alimentation.

Il est en outre possible de faire travailler les semi-conducteurs de ces générateurs de puissance sans perte par commutation, afin d'éviter des échauffements importants dans les semi-conducteurs.

Ainsi de façon classique, un mode de commutation douce au zéro de tension des transistors I₁, I**₂** est obtenu en munissant ces transistors I₁, I₂ de façon habituelle de diodes D₁, D₂ et de condensateurs C₁, C₂.

Afin de conserver ces modes de commutation douce, les réglages de puissance au niveau des générateurs se font en général en réglant la fréquence de travail autour de la fréquence de résonance.

Cette modulation de puissance par variation de la fréquence de travail du générateur présente cependant de nombreux inconvénients.

En particulier, la plage de fréquence dans laquelle doit varier le générateur est relativement forte si l'on veut que la puissance modulée varie également dans une plage forte (dans un rapport de 1 à 10 par exempte).

En outre, lorsque plusieurs générateurs à résonance travaillent en parallèle, il est impossible de les synchroniser si l'on veut conserver une possibilité de modulation de la puissance indépendante.

Cette situation génère alors des bruits d'intermodulation entre les différents générateurs travaillant à proximité à des fréquences différentes.

Un exemple de ce type de générateur résonant à commutation douce est notamment illustré dans le document FR 2 792 157.

Ce dernier décrit une solution dans laquelle plusieurs inducteurs peuvent être commandés par la même tension, à une même fréquence, mais avec un rapport cyclique réglable selon la technique connue dans l'art antérieur de modulation de largeur d'impulsion MLI.

Cependant, dans le document FR 2 792 157, ce type de fonctionnement nécessite d'utiliser des structures particulières faisant apparaître la notion de générateur maître et de générateurs esclaves dont les fonctionnements seront liés au fonctionnement du générateur maître.

Ce type de structure est peu adapté à un ensemble de foyers de cuisson par induction dans lequel chacun des foyers doit fonctionner de manière indépendante, sans que l'on définisse un maître et un(des) esclave(s).

La présente invention a pour but de résoudre les inconvénients précités et de proposer un générateur d'alimentation d'un circuit oscillant autorisant une modulation de puissance à partir d'une fréquence fixe, dans un rapport de puissance important.

A cet effet, la présente invention vise tout d'abord un générateur d'alimentation d'un circuit oscillant comprenant une inductance et un condensateur de résonance, adapté à fonctionner à fréquence fixe et comprenant au moins une paire de transistors pilotés suivant un rapport cyclique variable pour modifier la puissance.

Selon l'invention, ce générateur comprend une première diode entre un premier transistor de ladite paire et l'alimentation du générateur, et une deuxième diode entre le point de jonction de l'inductance et du condensateur de résonance et le point de jonction du premier transistor et de ladite première diode.

Grâce à ce montage particulier, la phase de fonctionnement du générateur dans laquelle la deuxième diode conduit est relativement courte.

Cette phase de fonctionnement, correspondant à un fonctionnement linéaire du générateur, est donc très petite au regard du fonctionnement en résonance de ce générateur, de telle sorte que la puissance restituée par celui-ci peut être maximisée.

Selon une caractéristique préférée de l'invention, les transistors sont associés à des diodes et des condensateurs adaptés à générer un fonctionnement en commutation douce au zéro de tension dudit générateur.

On obtient ainsi un générateur d'alimentation fonctionnant à fréquence fixe et à résonance afin d'obtenir un maximum de puissance sur une charge inductive, et fonctionnant en commutation douce du type ZVS (acronyme du terme anglais Zero Voltage Switch), mode dans lequel la commutation se fait à tension nulle et sous le courant nominal.

Ce type de commutation permet d'éviter des échauffements excessifs dans les semi-conducteurs constituant le générateur de puissance.

La présente invention vise également un ensemble de générateurs d'alimentation conformes à l'invention, lesdits générateurs étant synchronisés en fréquence et adaptés à être pilotes suivant un rapport cyclique différent.

Enfin, la présente invention vise également une table de cuisson par induction comprenant plusieurs inducteurs adaptés à constituer un ou plusieurs foyers de ladite table.

Selon l'invention, chaque inducteur est associé à un générateur d'alimentation conforme à l'invention, lesdits générateurs étant synchronisés en fréquence et étant adaptés à être pilotés suivant un rapport cyclique variable indépendamment les uns des autres.

D'autres particularités et avantages de l'invention apparaîtront encore dans la description ci-après.

Aux dessins annexés, donnés à titre d'exemples non limitatifs :
- la figure 1 est un circuit électrique d'un générateur d'alimentation de l'art antérieur, décrit ci-dessus ;
- la figure 2 est un circuit électrique d'un générateur d'alimentation conforme à un premier mode de réalisation de l'invention ;
- les figures 3, 4 et 5 sont des courbes illustrant pour des rapports cycliques différents les valeurs des tensions et des courants en différents points du circuit électrique de la figure 2 ;
- la figure 6 est un circuit électrique illustrant un deuxième mode de réalisation d'un générateur d'alimentation conforme à l'invention.
- la figure 7 est un circuit électrique illustrant un troisième mode de réalisation d'un générateur d'alimentation conforme à l'invention ; et
- la figure 8 est un schéma blocs illustrant un ensemble de générateurs d'alimentation conforme à l'invention.

On va décrire tout d'abord en référence à la figure 2 un circuit électrique d'un générateur d'alimentation conforme à un premier mode de réalisation de l'invention.

Ce générateur comporte deux transistors I₁, I₂ montés en demi-pont et alimentés par une tension E correspondant à la tension du réseau électrique redressée et filtrée.

De manière classique, ces transistors I₁, I₂ sont associés à des diodes D₁, D₂ et des condensateurs C₁, C₂ suivant un montage permettant une commutation en mode ZVS, c'est-à-dire un mode de commutation douce au passage par zéro de la tension.

Le circuit oscillant alimenté par ces transistors I₁, I₂ est constitué d'une inductance L et de condensateurs de résonance C₃, C₄.

Ce type de générateur à résonance permet de transmettre une puissance maximale à des charges inductives du type L, R telles que l'on trouve dans les foyers à induction, dans lesquels les charges sont constituées d'un inducteur et d'un récipient à chauffer.

A titre d'exemple ici, L peut avoir une valeur de l'ordre de 50 µH et les condensateurs de résonance C₃, C₄ ont une valeur de 680 nF.

Selon l'invention, une première diode D₅ est montée en série sur l'un des transistors du demi-pont, et ici à titre d'exemple non limitatif sur le transistor I₂.

Cette première diode D₅ est ainsi montée entre le transistor I₂ et l'alimentation E du générateur.

Une deuxième diode D₄ est montée en parallèle avec un condensateur de résonance C₄.

Cette deuxième diode D₄ est ainsi montée entre le point de jonction de l'inductance L et du condensateur de résonance C₄ et le point de jonction du transistor I₂ et de la première diode D₅.

Les diodes D₄, D₅ sont montées de telle sorte que la cathode de la deuxième diode D₄ est reliée à la cathode de la première diode D₅.

Bien entendu, un montage équivalent pourrait être obtenu en montant une diode en série avec l'autre transistor I₁ du demi-pont et une diode aux bornes de l'autre condensateur de résonance C₃.

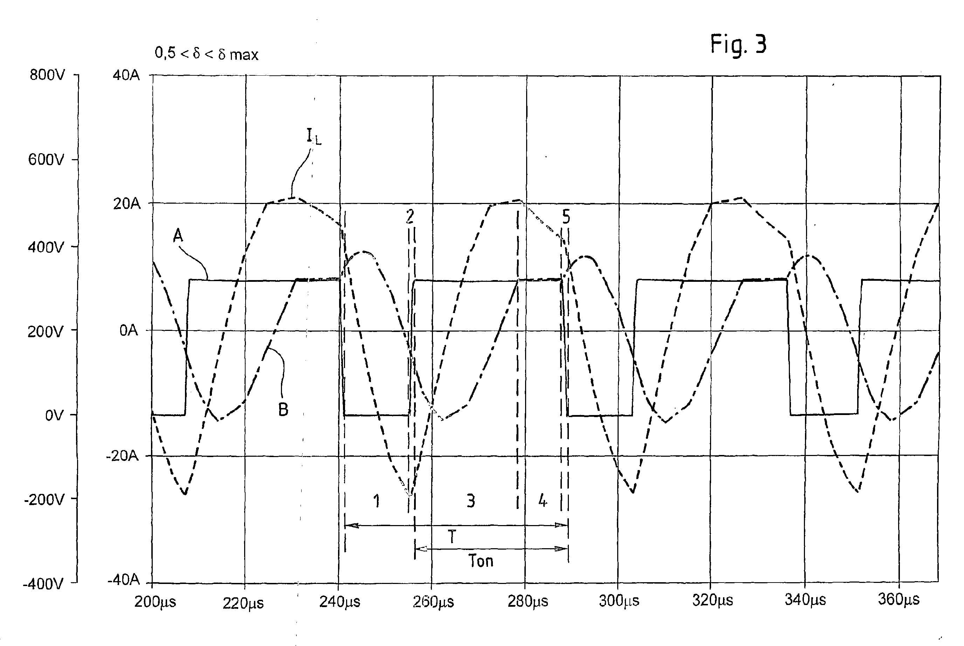

On va décrire à présent en référence aux figures 3, 4 et 5 le fonctionnement d'un tel générateur piloté par des moyens de commande (non représentés).

Sur ces figures, on a illustré en trait continu la tension en fonction du temps au point A du circuit tel qu'illustré à la figure 2, c'est-à-dire la tension aux bornes des transistors I₁, I₂.

La courbe en trait pointillé illustre le courant I_{L} circulant au niveau de la charge inductive F et la courbe en trait mixte illustre la tension au point B du circuit, c'est-à-dire aux bornes des condensateurs de résonance C₃, C₄.

La tension au point A est une tension d'alimentation à fréquence fixe de telle sorte que la période T de reproduction des signaux est identique sur les trois courbes des figures 3 à 5.

La période notée Tₒₙ correspond à la durée pendant laquelle le transistor I₂ monté en série avec la première diode D₅, conduit.

La puissance délivrée peut ainsi varier en modifiant le rapport cystique δ correspondant au rapport de la durée Tₒₙ sur la période T de répétition des signaux.

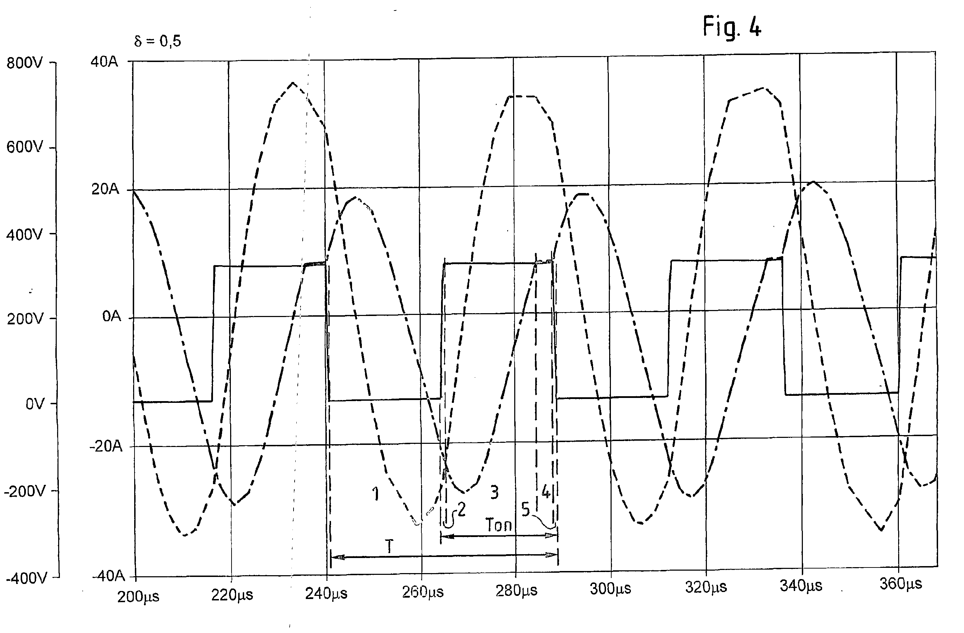

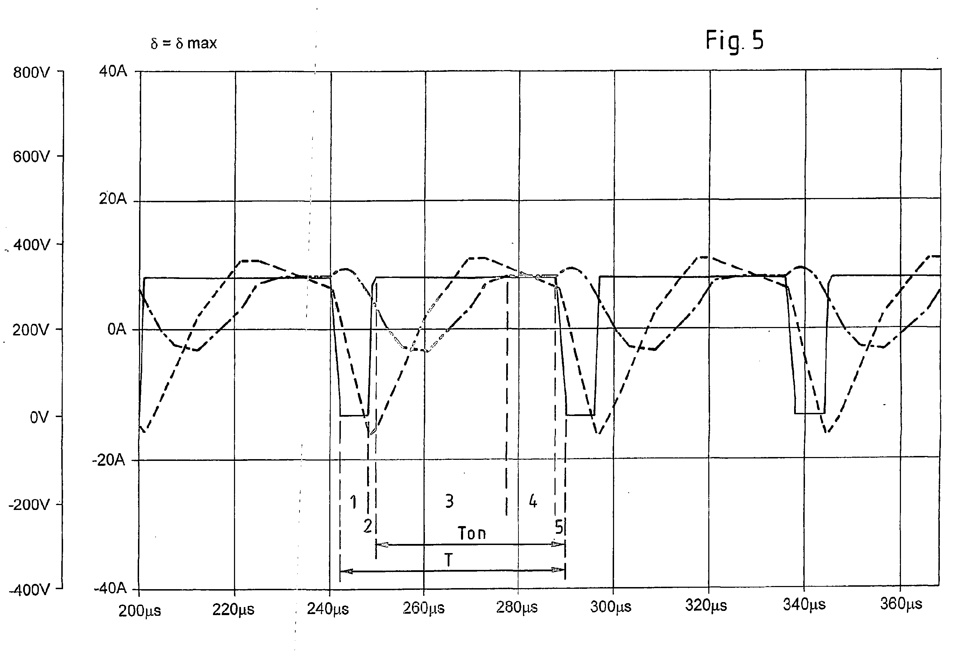

Ce rapport cyclique δ peut varier entre 0,5 (voir figure 4) où la puissance est maximale, et une valeur δ max (voir figure 5) où la puissance est minimale.

Cette valeur δ max peut être comprise typiquement entre 0,8 et 0,9.

Ainsi la modulation de puissance est réalisée en modulant la période Tₒₙ, c'est-à-dire la période pendant laquelle le transistor I₂ conduit, et en gardant la périodicité des signaux T constante.

On peut ainsi distinguer sur chaque période T de fonctionnement cinq phases distinctes, numérotées de 1 à 5 sur les figures :

### Phase 1

Le transistor I₁ conduit. Le courant I_{L} dans la charge inductive diminue et les condensateurs de résonance C₃, C₄ se déchargent en mode résonant.

### Phase 2

Le circuit de commande bloque alors le transistor I₁. Le courant I_{L} charge alors les condensateurs C₁, C₂ jusqu'à la conduction de la diode D₂, la tension aux bornes des transistors I₁, I₂ croissant lentement lors de la commutation, tel que généré par le montage en commutation douce du type ZVS.

Pendant cette phase, le mode résonant formé par le courant I_{L} et les condensateurs de résonance C₃, C₄ continue.

### Phase 3

La diode D₂ conduit, puis le transistor I₂ conduit également. Les condensateurs de résonance C₃, C₄ se déchargent en mode résonant de telle sorte que la tension au point B remonte jusqu'à une valeur suffisante pour obtenir la conduction de la seconde diode D₄.

### Phase 4

La diode D₄ conduit de telle sorte que le courant I_{L} ne circulé pas dans les condensateurs de résonance C₃, C₄. Le courant I_{L} se décharge lestement dans le court circuit constitué par la seconde diode D₄ et le transistor I₂ qui est toujours en mode conduction.

Cette décharge se fait alors en mode exponentiel et non en mode résonant et la valeur de la tension au point B demeure égale à la valeur de la tension d'alimentation E.

On constate que, lors de cette phase 4, le courant I_{L} a une décroissance plus lente que dans le mode résonant, ce courant I_{L} décroissant suivant une pente proportionnelle à L/R.

Ainsi, à la fin de la phase 4, la valeur du courant I_{L} reste positive de telle sorte qu'il est possible d'obtenir une commutation douce lors du blocage du transistor I₂.

### Phase 5

Le blocage du transistor I₂ est commandé et on observe de manière analogue à la phase 2 une décroissance lente de la tension aux bornes des transistors I₁, I₂ conformément au mode de commutation du type ZVS.

La première diode D₅ se bloque, puis la deuxième diode D₄ se bloque également de telle sorte que la tension B aux bornes des condensateurs de résonance C₃, C₄ augmente et devient supérieure à la valeur de la tension d'alimentation E.

Cette phase 5 se poursuit alors par une nouvelle phase 1 d'une nouvelle période T.

Ce fonctionnement est identique quel que soit le rapport δ choisi. En particulier, sur la figure 4, à puissance maximale, lorsque δ est égal 0,5, le courant I_{L} circulant dans la charge est très important de telle sorte que la puissance restituée est maximale. En particulier, cette puissance délivrée par le générateur peut être très proche de celle obtenue par un montage classique tel qu'illustré à la figure 1, à la fréquence de résonance. La réduction de puissance due au fonctionnement en quasi-résonance du générateur est seulement de l'ordre de 25 à 30 %.

En outre, la phase 4 pendant laquelle la deuxième diode D₄ conduit est très faiblie.

A contrario dans la figure 5, lorsque la valeur du rapport δ est maximale, on obtient un courant I_{L} relativement faible correspondant à une puissance minimale délivrée par le générateur.

On constate cependant que, même dans ce mode de fonctionnement, le courant I_{L} demeure suffisant, au début des phases 2 et 5 pour conserver les modes de commutation douce du type ZVS, et demeure notamment suffisamment important pour décharger les condensateurs C₁, C₂ lors des phases de commutation.

Ainsi, ce circuit électrique fonctionne à pleine puissance dans un mode quasi-résonant adapté aux charges inductives L, R.

Grâce à la modulation de puissance en modifiant la largeur de bande, il est possible de travailler à fréquence fixe pour le générateur.

La profondeur de modulation, comprise entre δ égale 0,5 et δ égale δ max est relativement importante, et correspond à un rapport de puissance de 1 à 7.

En outre, quel que soit le rapport cyclique δ choisi, il permet de conserver les modes de commutation douce grâce à une décroissance faible du courant I_{L} dans le circuit.

Bien entendu, la présente invention n'est pas limitée à l'exemple de circuit illustré à la figure 2.

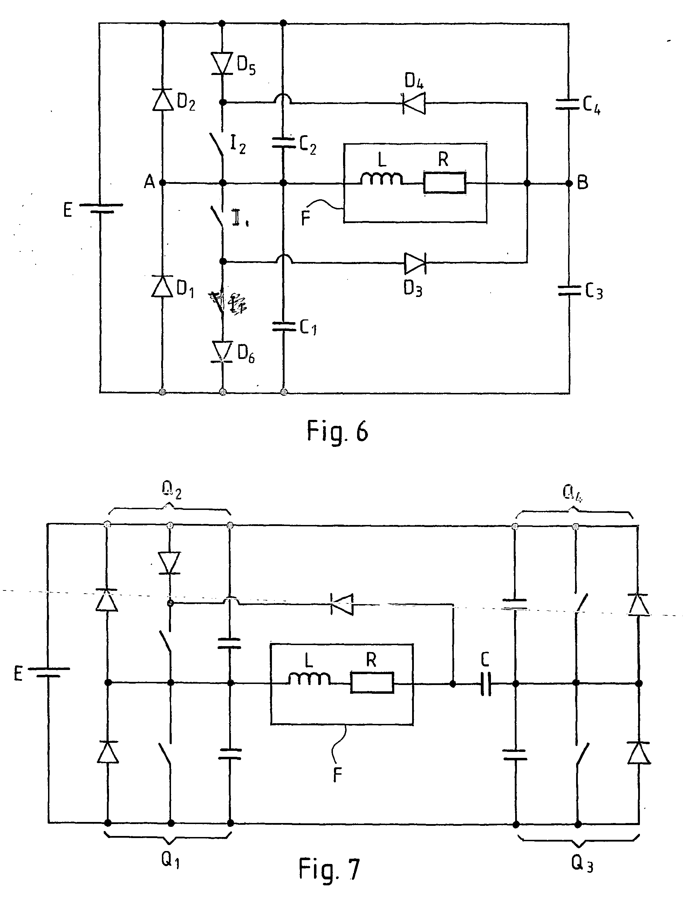

En particulier, elle s'applique de manière identique au circuit électrique de la figure 6, illustrant un deuxième mode de réalisation de l'invention.

Dans ce mode de réalisation, un montage d'une troisième diode D₆ et d'une quatrième diode D₃, analogues respectivement à la première diode D₅ et à la deuxième diode D₄, est réalisé sur la deuxième branche du demi-pont, de telle sorte que la troisième diode D₆ est montée en série avec l'autre transistor I₁.

Le fonctionnement du générateur à résonance comporte ainsi deux phases linéaires, l'une lorsque le courant I_{L} est positif, l'autre lorsque le courant I_{L} est négatif.

En outre, comme illustré à la figure 7, il peut être intéressant de remplacer le demi-pont par un pont complet comportant quatre transistors Q₁, Q₂, Q₃, Q₄.

Ce montage peut être particulièrement performant lorsque les tensions mises en jeu sont très importantes, de l'ordre de 3000 volts par exemple, les puissances délivrées par le générateur pouvant alors atteindre 300 à 400 kW.

Bien entendu, bien qu'on ait illustré ici l'alimentation d'un foyer F formé d'une charge inductive L, R, ce type de générateur pourrait également être utilisé pour alimenter une bobine d'un transformateur.

Par ailleurs, le montage en commutation douce (grâce aux condensateurs C₁, C₂) des transistors I₁, I₂ pourrait également être supprimé, dès lors que les semi-conducteurs supportent de travailler en commutation dure.

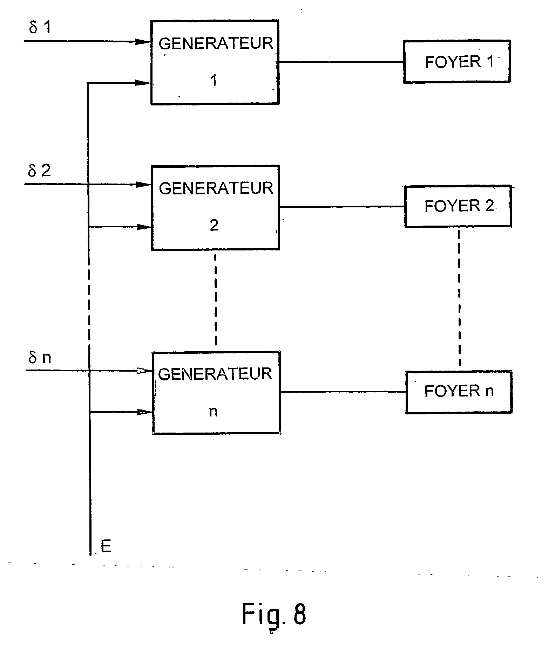

Comme illustré à la figure 8, le générateur à résonance conforme à l'invention est particulièrement bien adapté pour alimenter en parallèle plusieurs foyers.

Les générateurs peuvent ainsi être synchronisés en fréquence tout en fonctionnant suivant des rapports cycliques (δ₁, δ₂ ... δₙ) différents de telle sorte que la puissance transmise aux différents foyers peut être réglée indépendamment les uns des autres.

Ce type de générateurs est bien adapté à alimenter plusieurs foyers d'une même table de cuisson par induction, et en particulier une table constituée d'un grand nombre d'inducteurs disposés matriciellement dans le plan de cuisson.

## Revendications

1. Générateur d'alimentation d'un circuit oscillant comprenant une inductance (L) et un condensateur de résonance (C₃, C₄), adapté à fonctionner à fréquence fixe et comprenant au moins une paire de transistors (I₁, I₂) montés en demi-pont et pilotés suivant un rapport cyclique variable (δ) pour modifier la puissance, le point de jonction desdits transistors alimentant l'inductance de résonance, **caractérisé en ce qu'**il comprend une première diode (D₅) entre un premier transistor (I₂) de ladite paire et l'alimentation dudit générateur et une deuxième diode (D₄) entre le point de jonction de l'inductance (L) et du condensateur de résonance (C₃, C₄) et le point de jonction dudit premier transistor (I₂) et de ladite première diode (D₅) ladite deuxième diode étant connectée de telle sorte que lors d'une phase de fonctionnement le courant dans l'inductance circule dans le court-circuit constitué par ladite deuxiéme diode et ledit premier transistor.

2. Générateur conforme à la revendication 1, **caractérisé en ce que** lesdits transistors (I₁, I₂) sont associés à des diodes (D₁, D₂) et des condensateurs (C₁, C₂) adaptés à générer un fonctionnement en commutation douce dudit générateur.

3. Générateur conforme à la revendication 2, **caractérisé en ce qu'**il est adapté à travailler en commutation au passage par zéro de la tension.

4. Générateur conforme à l'une des revendications 1 à 3, **caractérisé en ce qu'**il comprend une troisième diode (D₆) entre- un second transistor (I₁) de ladite paire et l'alimentation dudit générateur et une quatrième diode (D₃) entre le point de jonction de l'inductance (L) et du condensateur de résonance (C₃, C₄) et le point de jonction dudit second transistor (I₁) et de ladite troisième diode (D₆).

5. Ensemble de générateurs d'alimentation conforme à l'une des revendications 1 à 4, **caractérisé en ce que** lesdits générateurs sont synchronisés en fréquence, et pilotés suivant un rapport cyclique différent (δ₁, δ₂ ... δₙ).

6. Table de cuisson par induction comprenant plusieurs inducteurs adaptés à constituer un ou plusieurs foyers de cuisson, **caractérisée en ce que** lesdits inducteurs sont associés respectivement à des générateurs d'alimentation conformes à l'une des revendications 1 à 4, lesdits générateurs étant synchronisés en fréquence et étant adaptés à être pilotés suivant un rapport cyclique variable indépendamment les uns des autres.

## Claims

1. Supply generator for an oscillatory circuit comprising an inductor (L) and a resonant capacitor (C₃, C₄) adapted to operate at a fixed frequency and comprising at least one pair of transistors (I₁, I₂) that are connected in a half-bridge configuration and are controlled at a variable duty cycle (δ) to modify the power, the connection point of said transistors supplying the resonant capacitor, **characterised in that** it comprises a first diode (D₅) between a first transistor (I₂) of said pair and the supply of said generator and a second diode (D₄) between the connection point of the inductor (L) and the resonant capacitor (C₃, C₄) and the connection point of said first transistor (I₂) and said first diode (D₅), said second diode being connected in such a way that, during an operating phase, the current in the inductor flows into the short circuit formed by said second diode and said first transistor.

2. Generator according to claim 1, **characterised in that** said transistors (I_{I}, I₂) are associated with diodes (D₁, D₂) and capacitors (C₁, C₂) adapted to operate said generator in a soft switching mode.

3. Generator according to claim 2, **characterised in that** it is adapted to switch at the zero crossing of the voltage.

4. Generator according to any one of claims 1 to 3, **characterised in that** it comprises a third diode (D₆) between a second transistor (I₁) of said pair and the supply of said generator and a fourth diode (D₃) between the connection point of the inductor (L) and the resonant capacitor (C₃, C₄) and the connection point of said second transistor (I₁) and said third diode (D₆).

5. Set of supply generators according to any one of claims 1 to 4, **characterised in that** said generators are synchronised in frequency and controlled at different duty cycles (δ₁, δ₂, ... δₙ).

6. Induction cooking hob comprising a plurality of inductors adapted to constitute one or more cooking rings, **characterised in that** said inductors are associated with respective supply generators according to any one of claims 1 to 4, said generators being synchronised in frequency and adapted to be controlled independently of each other with a variable duty cycle.

## Patentansprüche

1. Generator zur Versorgung eines Schwingkreises mit einer Induktivität (L) und einem Resonanzkondensator (C₃, C₄), der dazu ausgelegt ist, bei einer festen Frequenz zu arbeiten und mindestens zwei Transistoren (I₁, I₂) aufweist, die in einer Halbbrücke angeordnet sind und mit einem variablen Tastverhältnis (δ) so angesteuert werden, dass sie die Leistung verändern, wobei die Verbindungsstelle zwischen den Transistoren die Resonanzinduktivität speist, **dadurch gekennzeichnet, dass** er eine erste Diode (D₅) zwischen einem ersten Transistor (I₂) des Paars und der Versorgung des Generators sowie eine zweite Diode (D₄) zwischen der Verbindungsstelle zwischen der Induktivität (L) und dem Resonanzkondensator (C₃, C₄) und der Verbindungsstelle zwischen dem ersten Transistor (I₂) und der ersten Diode (D₅) aufweist, wobei die zweite Diode so gekoppelt ist, dass in einer Betriebsphase der Strom in der Induktivität in dem Kurzschluss zirkuliert, der durch die zweite Diode und den ersten Transistor gebildet ist.

2. Generator nach Anspruch 1, **dadurch gekennzeichnet, dass** die Transistoren (I₁, I₂) Dioden (D₁, D₂) und Kondensatoren (C₁, C₂) zugeordnet sind, die dazu geeignet sind, einen Betrieb des Generators mit sanfter Umschaltung zu erzeugen.

3. Generator nach Anspruch 2**, dadurch gekennzeichnet, dass** er dazu geeignet ist, im Schaltbetrieb zu arbeiten, wenn die Spannung durch null geht.

4. Generator nach einem der Ansprüche 1 bis 3, **dadurch gekennzeichnet, dass** er eine dritte Diode (D₆) zwischen einem zweiten Transistor (I₁) des Paars und der Versorgung des Generators sowie eine vierte Diode (D₃) zwischen der Verbindungsstellte zwischen der Induktivität (L) und dem Resonanzkondensator (C₃, C₄) und der Verbindungsstelle zwischen dem zweiten Transistor (I₁) und der dritten Diode (D₆) aufweist.

5. Baugruppe aus Versorgungsgeneratoren nach einem der Ansprüche 1 bis 4, **dadurch gekennzeichnet, dass** die Generatoren hinsichtlich der Frequenz synchronisiert sind und mit unterschiedlichen Tastverhältnissen (δ₁, δ₂... δₙ) angesteuert werden.

6. Induktionsherdplatte mit mehreren Induktoren, die dazu geeignet sind, ein oder mehrere Kochfelder zu bilden, **dadurch gekennzeichnet, dass** die Induktoren jeweils Versorgungsgeneratoren nach einem der Ansprüche 1 bis 4 zugeordnet sind, wobei die Generatoren hinsichtlich der Frequenz synchronisiert und dazu geeignet sind, unabhängig voneinander mit einem variablen Tastverhältnissen angesteuert zu werden.
